(19) Europäisches Patentamt
European Patent Office
Office européen des brevets

(11) **EP 1 998 565 A1**

(12) **EUROPEAN PATENT APPLICATION**
published in accordance with Art. 158(3) EPC

(43) Date of publication:
**03.12.2008 Bulletin 2008/49**

(51) Int Cl.:
***H04N 5/91*** *(2006.01)*

(21) Application number: **07737600.2**

(22) Date of filing: **01.03.2007**

(86) International application number:
**PCT/JP2007/053920**

(87) International publication number:
**WO 2007/100044 (07.09.2007 Gazette 2007/36)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.03.2006 JP 2006055136**

(71) Applicants:
• **L.A.B. Inc.**
**Otsukacho**
**Miyazaki, Miyazaki 880-0951 (JP)**

• **Hatabau, Yasunori**
**Fukui-shi, Fukui 910-3635 (JP)**

(72) Inventor: **HATABU, Yasunori**
**Fukui-shi**
**Fukui 910-3635 (JP)**

(74) Representative: **Collins, John David et al**
**Marks & Clerk**
**90 Long Acre**
**London**
**WC2E 9RA (GB)**

(54) **VIDEO-LINKED CONTROLLED OBJECT EXTERNAL DEVICE CONTROLLER AND VIDEO RECORDING MEDIUM USED FOR SAME**

(57)      An extended video data obtained by adding, to a first video data required for outputting a video signal of a main image, a second video data required for outputting the video signal of an information-embedded mark image 4 that reflects the contents of a control information used to control operations of an external target device 62 is recorded in a video recording medium 61M beforehand. An extended video signal obtained by reproducing the extended video data is separated by an external device controller 60 into a main image reproduced video signal based on the first video data and an information-embedded mark image reproduced video signal based on the second video data. Then, the separated information-embedded mark image reproduced video signal is decoded into operation control data which can be directly read by the external target device 62 and output to the external target device 62.

FIG.1

EP 1 998 565 A1

**Description**

RELATED APPLICATIONS

This application is a National Stage entry of International Application No. PCT/JP2007/053920, filed March 1, 2007, and claims the priority of Japanese Patent Application No. 2006-055136 filed on March 1, 2006. The disclosures of the prior applications are hereby incorporated herein in their entirety by reference.

BACKCROLTND OF THE INVENTION

Field of the Invention

The invention relates to a video-linked controller of external target device and a video recording medium used therein.

Related Application

Patent Document 1: Japanese Patent Application Laid-Open Publication No. 10-164524

Description of the Related Art

In recent years, sound-multiplex broadcasting and teletext broadcasting have already been put into practical use more and more as multiplex communication techniques have also been applied to TV broadcasting. In both of these broadcasting schemes, a sound frequency band and a character frequency band are each set separately from a video frequency band, not based on a concept of embedding the accompanying information such as sounds and characters in transmit images of a video. In order to solve this problem, Patent Document 1 discloses a technique of embedding barcode-like accompanying information in a transmit image of a video, more specifically, in a partial region of its scanning lines. More specifically, detailed information of a target product in the case of TV commercial broadcasting and contents information of a TV program is reflected in a barcode beforehand so that a video signal received by a TV set is analyzed to read the contents of the barcode and display them as subtitles etc. on a video screen.
However, this technique will enclose an information destination in the TV set and cannot be expected to have more than a function to display accompanying information on the screen, thus having a major disadvantage in terms of extendability.

SUMMARY OF THE INVENTION

It is an object of the invention to enable outputting of information accompanying a video to an electronic device outside a video player system and to provide a video-linked controller of external target device capable of extending its function so as to cover linked control of the electronic device and a video recording medium used in it.
To solve the above problems, a video-linked controller of external target device of the invention, in which:

a video player that uses, as a video data source, extended video data obtained by adding, to a first video data required for outputting a video signal of a main image, a second video data required for outputting a video signal of an information-embedded mark image that reflects in it contents of control information used to control operations of an external target device is connected in use to the external target device; and
the controller comprises:

a mark image reproduced video signal extraction means to extract a mark image reproduced video signal, which is output from the player as reproduction of the video data goes on, from an extended video signal obtained by adding an information-embedded mark image reproduced video signal based on the second video data to a main image reproduced video signal based on the first video data;
an operation control data decoding means to analyze contents of the mark image reproduced video signal and decode them into operation control data that can be read directly by the external target device in order to perform operation control processing on itself; and
an operation control data output means to output the decoded operation control data to the external target device.

A video recording medium of the invention records the extended video data which is used as a video data source directed to the above video-linked controller of external target device of the invention and which is obtained by adding, to the first video data required for outputting a video signal of a main image, the second video data required for outputting a video signal of an information-embedded mark image that reflects in it contents of control information used to control operations of the external target device, in a form that can be reproduced by the video player connected to the video-linked controller of external target device.

According to the configuration of the above video-linked controller of external target device of the above-described invention, the extended video data obtained by adding, to the first video data required for outputting the video signal of the main image, the second video data required for outputting the video signal of the information-embedded mark image that reflects in it contents of the control information used to control operations of the external target device is recoded in the video recording medium beforehand. An extended video signal obtained by the reproduction of the extended video data is separated by the external target device of the invention into the main image reproduced video signal based on the first video data and the information-embedded mark image reproduced video signal based on the second video data. Then, the separated information-embedded mark image reproduced video signal is decoded into operation control data that can be read directly by the external target device and is output to the external target device. It is thus possible to control the operations of the external target device in conjunction with a video, thus achieving large-scaled external expansion of functions, which have not been achieved by the conventional video player systems.

In the video recording medium of the invention, control information used to control the operations of an external target device is embedded as part of video data in the form of an information-embedded mark image and so can be reproduced by an existing video player like an ordinary video recording medium; therefore, by passing through a video-linked controller of external target device of the invention, the information-embedded mark image can be decoded into operation control data and output to the external target device, and so can function as a new video data source that can be used to control the operations of the external target device linked to a video.

It should be noted that the external target devices to which the invention can be applied are not limited in type but include, for example, massagers and toys such as motorized models as well as robots used as education materials for children. In this case, the external target device is comprised of a drive portion (for example, an operation portion that gives massage force to the human body in the case of a massager and a mechanical operation portion in the case of a robot or a motorized model) and a control hardware portion that conducts directly control on the operations of the above-described drive portion by using control information from a controller of the invention.

This control hardware portion can be constituted of a microcomputer equipped with an extended video data input interface or dedicated hardware having similar processing capabilities. Further, a data source from which extended video data is acquired may be, besides, for example, a video recording medium player (e.g., DVD player or HDD/DVD recorder) directly connected to the above-described input interface, an information database connected to the above-described input interface via a network, which may be a LAN or the internet, or a broadcast receiver which receives broadcasts from a TV tuner.

Further, a video-linked controller of external target device of the invention may be incorporated integrally into an external target device itself, thus also belonging to the concept of "being connected to an external target device and used". The above-described control hardware portion can be also integrated with a controller of the invention, for example, constituted of commonly used microcomputer and peripheral hardware.

Extended video data can be created as data of an extended video frame obtained by embedding an information-embedded mark image in a video frame used to display a main image on an output monitor. The mark image reproduced video signal extraction means can extract as a mark image reproduced video signal a video signal of pixels of an information-embedded mark image from a reproduced video signal based on the data of this extended video frame. By this configuration, a pixel synchronization signal can be measured by a counter to easily identify an output timing of a pixel in an individual address, thereby easily extracting the mark image reproduced video signal.

In an information-embedded mark image, a similar barcode as disclosed in Patent Document 1 can be used, while the quantity of information that can be embedded can be increased even more by the following approach. Specifically, set values for output of pixels of an image are quantized into a plurality of stages of at least two bits having a predetermined order, to establish a unique correspondence relation between rankings in the order of those output set values and the controlling bit data comprised of a plurality of bits to describe the contents of control information. Further, the operation control data decoding means is assumed to have a controlling bit data decoding means to detect the output set values of the pixels reflected in the mark image reproduced video signal and decode them into controlling bit data based on the above-described correspondence relation. Since a video recording medium can record an image in a condition where its quality is secured, even if an information-embedded mark image is recorded in it in color or grayscale, a reproduced video signal for that image can be suppressed to a small value in terms of error with respect to the output settings of the recorded pixels. Therefore, accompanying information, which has been limited to binary values by Patent Document 1 owing to restrictions on broadcast reception conditions, can be represented using more than two digits, thereby greatly increasing the quantity of information that can be embedded.

By the above-described configuration, color or grayscale pixel output set values indicated by the second video data recorded in the medium will caused to correspond to the controlling bit data comprised of a plurality of bits. However, the invention inevitably involves the occurrence of processing to once reproduce this second video data to provide it as a reproduced video signal (concerned with monitor display) and decode it again into information comprised of a plurality of bits indicated by pixel output values, that is, controlling bit data by using a controller of the invention. Therefore, an influence of noise etc. in reproduction or decoding processing may cause the post-decoding controlling bit data not to properly correspond to the pixel output set values in the medium, thus resulting in an error factor. The inventor et al. propose various methods to take measures against this influence of noise etc.

First, an information-embedded mark image is delimited into pixel aggregate units each of which is comprised of a plurality of pixels having a uniformly predetermined output set value, so that the controlling bit data decoding means can be constituted so as to decode a signal into the controlling bit data based on the output set value predetermined for this pixel aggregate unit. Since information-embedded mark image can be constituted using as a unit a suite of a plurality of pixels having the uniformly predetermined output set value, it is possible to greatly reduce the influence of noise etc. in contrast to a single-pixel configuration.

This influence is even more remarkable, in particular, in a case where an analog video signal such as an NTSC signal is used as the reproduced video signal. In a case where the extended video signal is an analog video signal, the controlling bit data decoding means can be constituted as something that has an A/D converter that decodes an analog input value of this analog video signal in which an output set value is reflected into controlling bit data by converting it into a digital value. In this case, the effects of configuring an information-embedded mark image by using as a unit a suite of a plurality of pixels having a uniformly predetermined output set value as described above will be even more notable.

A plurality of pieces of controlling bit data obtained through decoding can be aggregated to constitute a unit field for describing operation control data. It is thus possible to identify the operation control data and systematically transfer it to an external target device.

Specifically, a plurality of description unit fields can be aggregated to constitute frame structure data which provides a unit for outputting operation control data for an external target device so that this frame structure data may include, starting from the beginning in its output time series, an identification field to identify that the subsequent pixel strings are frame structure data that describes operation control data, a data length field to indicate the data length of the frame structure data, and a main field to indicate contents of the operation control data for the external target device, in this order. It is possible to easily identify whether frame structure data received as part of a video signal constitutes operation control data used by an external target device based on how the identification field is disposed and to securely decide to which extent the operation control data is effective by indicating a data length by using the data length field.

Further, it is possible to provide the same number of data bits for all of the controlling bit data pieces that constitute each of the description unit field and make the end of a data bit string in each description unit field a vertical parity bit for parity check of this data bit string, while making the last description unit field of the frame structure data specified by a data length a horizontal parity field that collects a plurality of horizontal parity bits for collectively performing parity check on the individual data bits having such an order that their preceding description unit fields may correspond to each other. It is thus possible to effectively prevent an error in data recognition owing to an influence such as noise.

In the above-described configuration, the main field that describes operation control data will also employ a constant number of data bits, so that by allowing increase or decrease in the number of the main fields in accordance with the size of the operation control data, more multifarious operation control data contents can be accommodated. In this case, a data length described in the data length field can be changed in accordance with the number of those main fields.

Further, a command number field that stores a command number which uniquely specifies an order to execute commands for an external target device based on operation control data described in the main field can be interposed between the identification field and the data length field. In this case, frame structure data that has the same contents described in the main field and the same command number can be repeatedly embedded into a plurality of video frames or video fields (the field in this case refers to, for example, a divided field of a video frame in the interlaced scanning mode and is different in concept from a field indicative of a data storage region in frame structure data). In other words, by embedding the same operation control data based on a plurality of the same command numbers in a video repeatedly, a fail safe function can be obtained in case of a failure to read any one of them owing to noise etc.

Next, an information-embedded mark image is delimited into pixel aggregate units each of which is composed of a constant number of pixels having a constant relative positional relationship, so that the controlling bit data decoding means can be constituted as something that performs decoding preparation operations which are predetermined in order to operate and combine output set values of the individual pixels belonging to these pixel aggregate units and that performs decoding into controlling bit data based on a result of these decoding operations. In other words, in this configuration, rather than causing pixel output set values to independently correspond to the controlling bit data, the controlling bit data is caused to correspond to a result of operation and combination performed on the output set values of a plurality of pixels (pixel aggregate unit). In such a manner, the set values of the pixels of an information-embedded mark image has a higher degree of freedom in obtaining the same decoded results as the controlling bit data by as much as the intervenient operations, thus giving birth to an advantage that greatly extends the display information-embedded mark image during video reproduction. In particular, it becomes sufficiently possible also to embed the controlling bit data without increasing an output set value difference so much between the pixels of a main image present around an information-embedded mark image, thereby greatly mitigating such a sense of discomfort that the information-embedded mark image may appear separated during the viewing of a video. In this case, the above-described pixel aggregate unit can be defined as an information-embedded pixel pair constituted of pixel pairs whose relative positional relationship is defined constant. In such a manner, only a total number of two output set values of the pixels is required to undergo the decoding preparation operations, thereby enabling simplifying a procedure for decoding.

An information-embedded pixel pair can be defined as a pair of pixels that are adjacent to each other in the same frame. The paired pixels adjacent to each other in the same frame often have comparatively approximate pixel set values, thus mitigating a sense of visual discomfort even in a condition where controlling bit data is embedded.

An information-embedded pixel pair can be defined as a pair of pixels that are adjacent to each other on the same scanning line. It is thus possible to directly subject pixel output set values sequentially taken in along a scanning sequence to decoding preparation operations, thereby simplifying the identification of information-embedded pixel pairs and, eventually, the decoding procedure. On the other hand, an information-embedded pixel pair can be defined also as a pair of pixels that are adjacent to each other between mutually adjacent scanning lines in the same frame and, further, as a pair of pixels adjacent to each other between mutually adjacent frames. Those adjacent pixel pair have different scanning lines or frames but in the same order on the scanning line or in the frame, thus enabling simplifying the processing to identify the information-embedded pixel pairs.

The controlling bit data decoding means can be constituted so as to perform difference operations on the output set values of information-embedded pixel pairs as the decoding preparation operations. It is then possible to perform decoding into the controlling bit data based on a comparison of a difference value obtained by these difference operations to a predetermined threshold value. By this scheme, processing to embed the controlling bit data can be performed simply only by providing an information-embedded pixel pair with output set values necessary and sufficient to determine whether the difference value is larger or smaller than the threshold value, while the decoding preparation operations only need to involve simple "subtractions", thus enabling greatly simplifying the processing procedure.

In this case, an information-embedded pixel pair can be generated by correctively converting output set values of the corresponding original pixel pair that has originally constituted a main image in such a manner that difference values which give controlling bit data having intended contents can be obtained by decoding preparation operations. In other words, since an information-embedded pixel pair is given by correctively shifting one or both of the output set values of an original pixel pair that has originally belonged to a main image in such a manner as to give birth to a desired difference value that corresponds to the controlling bit data to be embedded, the original pixel pair can be converted into the information-embedded pixel pair without changing the output set values with respect to this original pixel pair so much, thereby enabling embedding the controlling bit data less noticeable when a video is being viewed.

In this case, it is possible to define the corrective contents of output set values required for converting the original pixel pair into an information-embedded pixel pair so that the difference value may be at least a predetermined margin. By properly giving margin D, tolerance against noise etc. can be given within a range of this margin D.

Next, the data of an extended video frame can be put into an array in which pixel setting information that define the output set condition of each pixel on the output monitor are arranged in an order of the pixels on scanning lines which display the extended video frame on the output monitor. In this case, a region in which an information-embedded mark image is displayed can be determined as a scanning line at a predetermined position in a video frame. It is thus possible to easily know the arrival of a scanning line used as the information-embedded mark image display region from a synchronization signal for the display output of the scanning lines.

Extended video signals obtained by reproducing extended video data can be input in a distributed manner to the video output monitor and a controller of external target device of the invention. In this case, a main image reproduced video signal will be output as a video to the output monitor together with an information-embedded mark image. Further, the extended video signal can also be input once to the controller of external target device of the invention and then transferred to the output monitor. In this case, the information-embedded mark image reproduced video signal may also be transferred to the output monitor together with a main image reproduced video signal or may be removed (filtered out) in the controller of external target device of the invention and then transferred to the output monitor.

In either scheme, in the case of such a configuration that the main image reproduced video signal and the information-embedded mark image reproduced video signal may both be sent to the output monitor, an information-embedded mark image itself will not be a target of interest for the viewers originally and often the video, even if visually recognized directly, cannot be figured out in terms of what it means. Therefore, it is desirable to make an arrangement so that this information-embedded mark image may not hinder visual recognition of the main image reproduced video as much as possible.

For example, if the output monitor is of a raster scanning scheme, one or a plurality of scanning lines located at an either upper or lower end in a video frame can be defined as a region for displaying an information-embedded mark image. In this configuration, the scanning lines that provide an information-embedded mark image appear only at the upper or lower end of the screen and so will give a less uneasy feeling when a main image is being viewed.

Further, during an image frame switching interval, the output of a video signal on the side of the output monitor to each pixel is blocked, to display no video, so that this interval may be utilized to output the information-embedded mark image reproduced video signal.

An information-embedded mark image can be delimited into pixel aggregate units each of which is comprised of a plurality of pixels that are adjacent to each other on the scanning line and have a uniformly predetermined output set condition, so that the controlling bit data decoding means can be constituted so as to decode a signal into the controlling bit data based on the output set value predetermined for this pixel aggregate unit. It is thus possible to suppress the occurrence of an error due to noise etc.

BRIEF DESCRIPTION OF THE DRAWINGS

FIG. 1 is a schematic diagram of a system configuration which uses a video-linked controller of external target device of the invention;
FIG. 2 is a conceptual diagram showing one example of extended video data;
FIG. 3 is a schematic diagram showing the first example of a pixel configuration of an information-embedded mark image;
FIG. 4 is a schematic diagram showing the second example of the pixel configuration;
FIG. 5 is a diagram showing a correspondence relationship between quantization of luminance information and bit data;
FIG. 6 is a diagram showing a correspondence relationship between quantization of color information and bit data;
FIG. 7 is a conceptual diagram showing one example of frame structure data;
FIG. 8 is a diagram showing an example of an information-embedded mark image that corresponds to frame structure data which uses luminance information;
FIG. 9 is a diagram showing an example of an information-embedded mark image that corresponds to frame structure data which uses chromaticity information;
FIG. 10 is a block diagram showing the first example of a hardware configuration of the video-linked controller of external target device;
FIG. 11 is a block diagram showing the second example of the hardware configuration of the video-linked controller of external target device;
FIG. 12 is a schematic diagram showing the first example of embedding the controlling bit data based on a difference between adjacent pixels;
FIG. 13 is a schematic diagram showing the second example of the same;
FIG. 14 is a schematic diagram showing the third example of the same;
FIG. 15 is a block diagram showing the third example of the hardware configuration of the video-linked controller of external target device;
FIG. 16 is a flowchart showing a flow of processing to embed the controlling bit data based on a difference between adjacent pixels; and
FIG. 17 is a graph showing effects in the case of embedding the controlling bit data based on a difference between adjacent pixels.

BEST MODE FOR CARRYING OUT THE INVENTION

The following will describe embodiments of the invention with reference to the accompanying drawings.

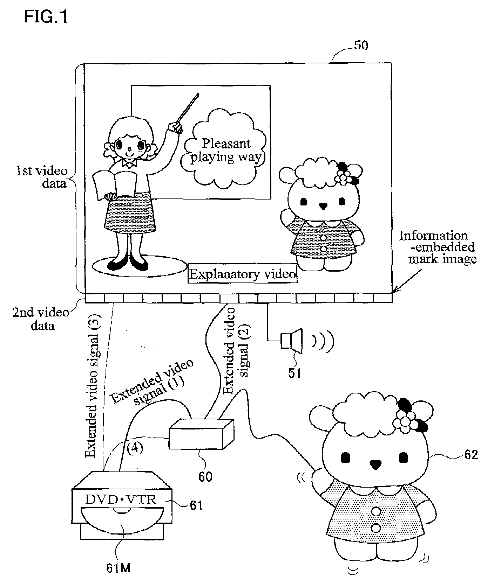

FIG. 1 outlines one example of the system configuration of a video-linked controller of external target device of the invention. A video-linked controller of external target device 60 uses, as video (moving picture) data source, extended video data obtained by adding to the first video (moving picture) data required for outputting a video signal of a main image the second video (moving picture) data required for outputting a video signal of an information-embedded mark image which reflects in it the contents of control information used to control the operations of an external target device. It is used in a condition where a video (moving picture) player 61 that reproduces the extended video (moving picture) data and an external target device 62 are connected to it. In the present embodiment, to the video-linked controller of external target device 60 is also connected an output monitor 50 (which is equipped with a speaker 51 that produces sounds) constituted of a TV set etc. Extended video data is recorded in a video recording medium 61M such as a DVD or a video tape and reproduced by a video player 61, thus enabling viewing a video containing a main image on the output monitor 50.

Due to a later-described circuit configuration, the video-linked controller of external target device 60 has the following features installed in it.

☐ Mark image reproduced video signal extraction means: extracts a mark image reproduced video signal, from an extended video signal which is output from the player as reproduction of video data goes on, obtained by adding an information-embedded mark image reproduced video signal based on the second video data to a main image reproduced video signal based on the first video data.

☐ Operation control data decoding means: analyzes the contents of the mark image reproduced video signal and decodes them into operation control data that can be read directly by the external target device 62 in order to perform operation control processing on itself.

☐ Operation control data output means: outputs this decoded operation control data to the external target device.

The video-linked controller of external target device 60 uses extended video data obtained by adding to the first video data required to reproduce a main image the second video data required for outputting a video signal of an information-embedded mark image that reflects in it the contents of control information used to control the operations of the external target device 62 and extracts a mark image reproduced video signal from an extended video signal obtained by reproducing that extended video data by using the player 61 and directly decodes (decrypts) it, thereby controlling the external target device 62.

As indicated by solid lines (1) and (2) in FIG. 1, an extended video signal obtained by reproducing extended video data is once input to the external device controller 60 and then transferred from this external device controller 60 to the output monitor 50. In this case, an information-embedded mark image reproduced video signal may also be transferred to the output monitor 50 together with a main image reproduced video signal or an information-embedded mark image reproduced video signal may be removed (filtered out) in the external device controller 60 of the invention and then transferred to the output monitor 50. On the other hand, as indicated by one-dot-and-dash lines (3) and (4), the extended video signal obtained by reproducing extended video data may be input in a distributed manner to the output monitor 50 and the external device controller 60. In either case, it is possible to control the external device controller 60 in conjunction with video information visualized on the output monitor 50 (TV set).

For example, if an electric appliance to be sold is the external target device 62, an explanatory video of its control information added in the form of an information-embedded mark image is prepared in a condition where it is recorded in the medium 61M such as a video tape or a DVD. If then the video player 61, the output monitor 50, the external device controller 60, and the external target device 62 are connected, linked control is conducted on the external target device 62 along the explanation by the video (and sounds) on the output monitor 50, thus enabling realistic explanation of the product. A customer can view detailed explanation by use of a video as somatically feeling the effects of a massager etc. on which linked control is conducted if the external target device is the massager etc., and as confirming the operations of a motorized model etc. if the external target device is the motorized model etc. Further, if it is education materials etc. for children, by preparing a robot 62 etc. serving as the education materials as the external target device 62, it is possible to cause the robot to hold a pose or chat in conjunction with the screen on which the contents of the medium 61M (video tape, DVD, etc.) are being reproduced, thus enabling children to learn more pleasantly and realistically than with the conventional materials for education. Further, if a medium recording different control information contents is substituted, the robot will operate differently in conjunction with it, thus giving birth to a new variety of use.

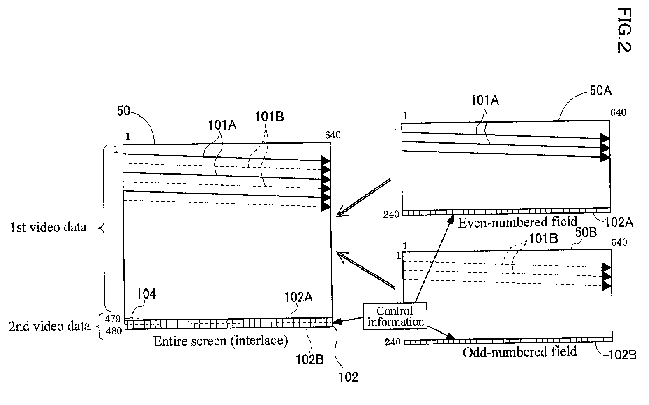

In the following description, a case in which a TV signal (video signal) of the NTSC signal standards is used is exemplified (however, the type of the video signal is not limited to it). As shown in FIG. 2, in many TV sets commercially available, the TV signal undergoes interlaced scanning, so that one image is composed of two field images 50A and 50B which are composed of even-numbered scanning lines 101A and odd-numbered scanning lines 101B respectively. Each of the field images has 262.5 scanning lines, out of which about 240 scanning lines can be used to display a video.

The data of an extended video frame is an array in which pixel setting information pieces that define the output set condition of each pixel on the output monitor 50 are arranged in an order of the pixels on the scanning lines 101A and 101B which display the extended video frame on the output monitor 50 and a region in which an information-embedded mark image 104 is displayed is determined beforehand as the scanning lines 101A and 101B at predetermined positions in the video frame.

The information-embedded mark image 104 can be inserted into an arbitrary scanning line and, if it is inserted during a display period, the information can be visually perceived. However, in the case of such a configuration that the main image reproduced video signal and the information-embedded mark image reproduced video signal may both be sent to the output monitor 50, the information-embedded mark image 104 itself will not be a target of interest of the viewers originally and often the video, even if visually recognized directly, cannot be figured out in terms of what it means. In this case, it is desirable to make an arrangement so that the information-embedded mark image 104 may not hinder visual recognition of the main image reproduced video as much as possible.

For example, if the output monitor 50 is of such a raster scanning scheme as described above, one or a plurality of scanning lines 101A or 101B located at an either upper or lower end in a video frame can be defined as a region for displaying the information-embedded mark image 104. In this configuration, the scanning lines 101A or 101B that provide the information-embedded mark image 104 appear only at the upper or lower end of the screen and so will give a less uneasy feeling when a main image is being viewed.

Further, during an image frame switching interval, the output of a video signal on the side of the output monitor 50 to each pixel is blocked and no video is displayed, so that this interval may be utilized to output the information-embedded mark image reproduced video signal. In this scheme, control can be conducted without affecting a video at all. Further, by assigning a plurality of scanning lines to the information-embedded mark image 104, more information can be embedded.

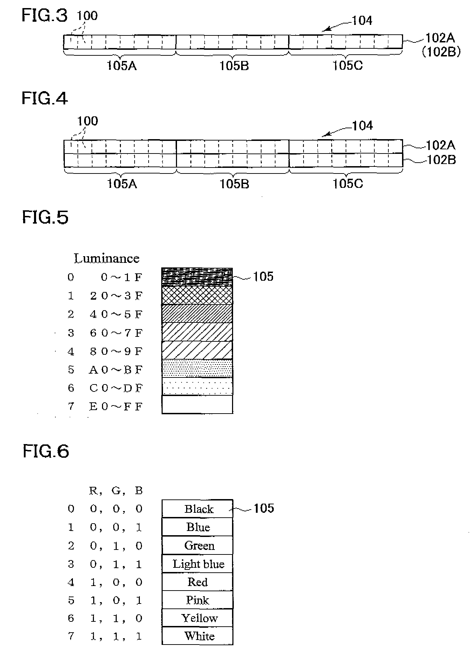

Next, as shown in FIG. 3, the information-embedded mark image 104 is delimited into pixel aggregate units 105A, 105B, and 105C each of which is comprised of a plurality of pixels 100 that have a uniformly predetermined output set value. With this, a signal is decoded into the controlling bit data based on the output set value predetermined for each of these pixel aggregate units 105A, 105B, and 105C. In the present embodiment, as shown in FIG. 3, the information-embedded mark image 104 is delimited into the pixel aggregate units 105A, 105B, and 105C each of which is comprised of a plurality of (eight in this case) pixels that are adjacent to each other on the scanning line 101A or 101B and have a uniformly predetermined output set condition.

A method of adding control information in a form of the information-embedded mark image 104 to video data will be described below with reference to FIG. 2. It is assumed here that information will be disposed on a display screen having 640 pixels horizontally and 480 pixels vertically and embedded fixedly into scanning lines 479 and 480 out of scanning line Nos. 1-480, In this case, control information is located at the last scanning line (scanning line 240) of a display interval of each of the fields 50A and 503B.

The information-embedded mark image 104 can be inserted into a scanning line by an arbitrary length starting from an arbitrary position of the line. It should be noted that the smaller the number of the constituent pixels of the information-embedded mark image 104 is, the more information can be embedded into one scanning line 101; however, it is necessary to take into account an image compressing method and image deteriorations in a video device. It is assumed here that the image will be inserted starting from the beginning first pixel out of the first through 640th pixels and the pixel aggregate units 105A, 105B, and 105C each have a length of eight pixels. In this case, up to 80 pieces of image data can be embedded into one scanning line. Further, the plurality of (three in this case) pixel aggregate units 105A, 105B, and 105C adjacent to each other on the scanning line 102A or 102B constitute a suite so that the controlling bit data obtained by decoding this suite may constitute the operation control data description unit field 104.

It should be noted that the pixel aggregate units 105A, 105B, and 105C may be set in such a shape as to extend over the plurality of scanning lines 102A or 102B adjacent to each other in an image frame as shown in FIG. 4.

Output set values of the pixels that constitute an image are quantized into a plurality of levels which are given by at least two bits and arranged in a predetermined order, to define a unique correspondence relationship between rankings in the order of those output set values and the controlling bit data of at least two bits which is used to describe the contents of control information. Then, the pixel output set values reflected in a mark image reproduced video signal are detected and decoded into a controlling bit data based on that correspondence relationship. In other words, the control information is converted into luminance information or color information in a video and embedded into it. For example, luminance information has a resolution of about eight bits as its amplitude, so that the more the resolution is segmented, the more information can be embedded; however, in this case, luminance information will be determined using three bits (in eight levels) as shown in FIG. 5. Further, it is also possible to give a three-bit representation by combining the existence and non-existence of each of red (R), green (G), and blue (B), which are color information of the monitor, as shown in FIG. 6. If a three-bit information is given to each of the pixel aggregate units 105A, 105B, and 105C that constitute the information-embedded mark image 104 of FIG. 3 in such a manner, up to 240 (=3 x 80) bits of control information can be embedded into one scanning line. It should be noted that when luminance information is used to write three-bit information, an arrangement can be made so as not to hinder viewing in the form of reducing a change in the main image to minimum by replacing only brightness with information without changing an original image. In other words, it is possible to use the pixels of a mark image also as those of the main image by changing the brightness information with respect to brightness of the main image in such a manner that necessary information as the mark image may be reflected in it while inheriting the color information of the main image.

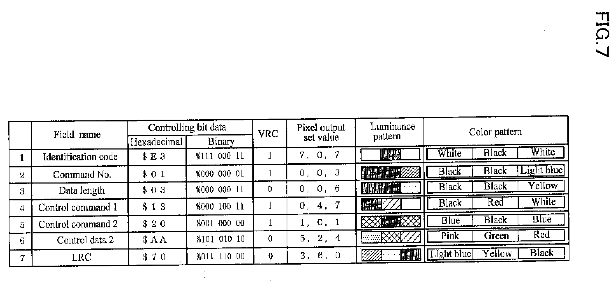

Next, an example of encoding to embed control information in the information-embedded mark image 104 will be described below with reference to FIG. 7. It is necessary to take measures sufficiently to protect video data from noise because the video data may be deteriorated as a result of image compression or image recording by an analog recorder. Further, consideration should be made so that a display screen may not be recognized as control information. For this purpose, a horizontal and vertical parity scheme is introduced by adding an identification code, a command No, and a data length to the header of the control information.

Specifically, a plurality of the above-described description unit fields (whose identification numbers are indicated by 1-7 in FIG. 7) are aggregated to constitute a frame structure data, which provides a unit in which operation control data is output to the external target device. This frame structure data includes an identification field (1) to identify that the following pixel string is frame structure data which describes operation control data, a data length field (3) to indicate a data length of the frame structure data, and main fields (4, 5, and 6) to indicate the contents of the operation control data to be sent to the external target device 62, in this order. Further, it is assumed that the same number of data bits (nine bits including parity bits in this case) are given for the controlling bit data that constitutes each of the description unit fields and the end of the data bit string of each description unit field is used as a vertical parity bit VRC to perform parity check on this data bit string. It is also assumed that the last description unit field of a frame structure data identified by the data length (3) is used as a horizontal parity field LRC (7) by which parity check is conducted for aggregated data bits of the corresponding order of the preceding description unit fields. Further, a command number field (2) to store the number of a command that uniquely identifies a command execution order on the external target device based on operation control data described in the main fields (4, 5, and 6) is interposed between the identification field (2) and the data length field (3).

Into the identification field (1), an identification code is written and it is located at the top of a command so that unless this code is acquired, it will be determined that the frame structure data does not include a control command, thereby preventing an error in recognition.

Further, into the command number field (2), a command number is written which will be incremented by one each time new control information is received (as the command No., 255 is followed by 0 for resumption). The same pieces of control information having the same command No. added in such a manner will be embedded over a plurality of image fields (or image frames). Then, if the process fails to execute the control information of a command No., the subsequent control information having the same command No. is used in retrial, thus enhancing the rate of recognition. For this purpose, the same information will be written a plurality of number of times redundantly without changing their command Nos. It should be noted that in order to prevent meaningless repetition of executions of the same control information, once the control information is executed, no control information having the same command No. will be accepted any more. In other words, strict parity check such as described above will be conducted on the contents of control information having respective command No. so as to detect an error, so that if no error is detected, the other control information pieces having the same command No. will all be removed to accept a command having the next new No. Further, if, for example, a chapter of a DVD is altered, a different command will appear newly, so that the information of the acquired command No. will immediately be recognized as new command No. information (that is, no sameness check will be conducted on the command Nos. with respect to the preceding chapters).

Further, the data length (3) indicates the number of bytes of a command and it is added to indicate the position of the horizontal parity (LRC) field (7). A parity bit (VRC) is added to the eight bits of data to provide nine bits so that a vertical parity check may be conducted (horizontally in FIG. 7), which is further followed by a horizontal parity check (as viewed in the vertical direction in FIG. 7), thereby preventing an error in recognition.

Next, the main fields (4, 5, and 6) are used to describe operation control data and each of which is composed of a constant number of data bits in order to conduct the above-described parity checks. Here, the number of the main fields can be changed in accordance with the size of the operation control data (three fields are allocated in FIG. 7). Further, the length of data described in the data length field will be changed in accordance with the number of these main fields. In FIG. 7, a control command 1 ($13) stored into the main field (4) is, for example, a one-word command to initialize the external target device. Further, a control command 2 ($20) in a main field (5) is, for example, a two-word command to output a control data ($AA) in a subsequent main field (6), to control the external target device. By thus preparing a plurality of command lengths, a lot of commands can be accommodated.

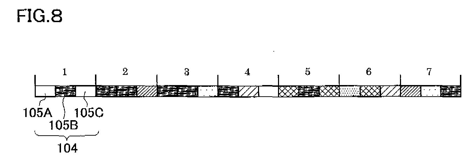

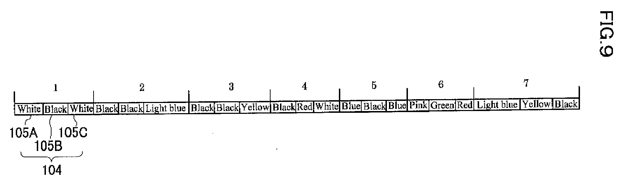

Now, the one vertical parity bit is added to the eight-bit command data to provide nine bits, thereby providing a three-by-three bits pattern (a description unit field 104). This is expressed in a luminance pattern and a color pattern as shown in the right half of FIG. 7, and examples of the information-embedded mark image 104 which constitutes the above-described description unit field and will be displayed on the scanning line Nos. 479 and 480 on the screen of FIG. 2 are shown in FIGS. 8 and 9, respectively.

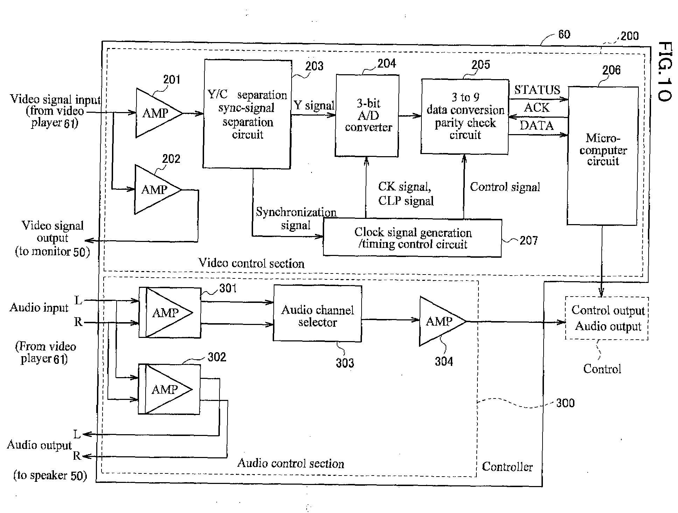

FIG. 10 shows an example of a circuit configuration of a video-linked controller of external target device 60 that controls an external target device by recognizing a luminance pattern based on a video signal of the information-embedded mark image 104. A video output signal (which has become the above-described extended video signal) of the video player is connected to a video signal input of the present controller. Then, this input video signal is divided into two branches, one of which is used as a video input signal for a monitor TV set in a condition where it is load~ compensated by a buffer amplifier (AMP) 202.

The other branch of the video input signal is corrected in amplitude by a buffer amplifier (AMP) 201 and then separated into a luminance signal (Y signal) and a synchronization signal by a Y/C separation sync-signal separation circuit 203. A clock signal generation/timing control circuit 207 generates from the separated synchronization signal a quantized sampling clock signal (CK) for an A/D converter 204 and a clamp signal (CLP) to hold a signal level and also creates a control timing signal required by a three-to-nine data conversion circuit 205. The present embodiment employs a video decoder (product name: ML86V7667 made by OKI Electric Industry Co., Ltd.), which unifies the blocks of the Y/C separation sync-signal separation circuit 203 and the A/D converter 204. It employs also a gate array (product name: XC9572 made by XILINX, Inc.), which unifies the blocks of a data conversion circuit 205 and the clock signal generation/ timing control circuit 207. It further employs an AT9052313 (made by ATMEL Corporation) as a microcomputer 206.

The luminance signal (Y signal) is converted into three-bit digital data pieces 0-7 by the A/D converter 204. It should be noted that the information-embedded mark image 104 has been allocated to pixels in a predetermined order on a predetermined scanning line. The serial number of a scanning line which the current video signal corresponds to can be known by detecting a vertical synchronization signal for an image frame and then counting a horizontal synchronization signal for each scanning line in the clock signal generation/timing control circuit 207, so that if a scanning line to which the information-embedded mark image 104 is allocated is reached, a sampling command signal for data conversion is output to the data conversion circuit 205.

The data conversion circuit 205 performs data sampling three times corresponding to the three pixel aggregate units 105A, 105B, and 105C shown in FIG. 3 to convert them into the data of a nine-bit description unit field and then conducts a vertical parity check in the circuit 205. Then, the eight-bit data portion except for the parity bit is transferred to the microcomputer 206. It is clear that the A/D converter 204 constitutes the major component of the operation control data decoding means and the data conversion circuit 205 constitutes the major component of the mark image reproduced video signal extraction means. However, as is clear from the circuit configuration, the data conversion circuit 205 digitizes also the main image reproduced video signal as well as the mark image reproduced video signal in the form of extracting digital bit data that corresponds to the mark image reproduced video signal in the data conversion circuit 205. On the other hand, the microcomputer 206 functions as operation control data output means by executing a predetermined program. It should be noted that it is clear that in the present embodiment, processing to extract the mark image reproduced video signal from an extended video signal to which the mark image reproduced video signal is added is performed after the signal is digitized.

In many cases an analog video signal does not have such a high resolution that the pixels on a scanning line can all be identified after quantization (digitization), in which case it is possible to stabilize the signal time-wise by setting the same output during the period of a plurality of successive pixels, thus greatly reducing errors in recognition of post-quantization set values.

The data conversion circuit 205 and the microcomputer 206 transfer a status signal (STATUS), an acknowledge signal (ACK), and a data signal (DATA) between them. As STATUS, a START flag, an ERR flag, a DATA flag, and a VRC flag may be output. The START flag is set to output a first command data, the ERR flag is set if a vertical parity error is detected, the DATA flag is set if en eight-bit data is prepared, and the VRC flag is set if the data has an odd number of Is. Those flags will be cleared by the ACK signal which is returned when the data is accepted by the microcomputer 206 and set based on the contents of the next data when it is prepared. The microcomputer 206 will process the control information along a processing procedure described in the next section, and control the output to the external target device.

Further, an audio signal from the video player 61 is capable of recording at least two channels of audio information, so that in the case of stereophonic sounds, for example, it is possible to use a signal of one channel as that of monitor sounds of the output monitor 50 and a signal of the other channel as that of sounds of, for example, a connected robot (external target device) for its independent chatting. For this purpose, the present controller is fitted with audio input terminals (L and R) to input sounds via a buffer amplifier 301 to an audio channel selector 303 so that the sounds of a channel selected by this selector 303 can be output via a buffer amplifier 304 to the external target device. It should be noted that an audio signal from the video player 61 will be output in a distributed manner also to a speaker 51 of the output monitor 50 of FIG. 1 via a buffer amplifier 302.

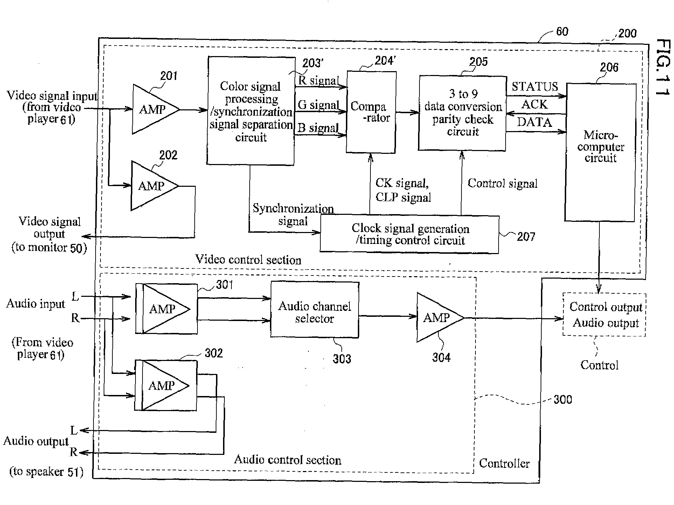

FIG. 11 shows another example of the circuit configuration of the video-linked controller of external target device of the invention that controls an external target device by recognizing a color pattern from a video signal of the information-embedded mark image 104. In order to recognize a color pattern, a color signal processing circuit 203' converts a video signal into a red color intensity signal (R signal), a green color intensity signal (G signal), and a blue color intensity signal (B signal), which undergo threshold value processing by a comparator 204' to determine whether each of these colors is present and then are converted into a bit data by the data conversion circuit 205. The remaining components are totally identical to those of FIG. 10 and so detailed description will be omitted.

It should be noted that the operation control data (or sounds) may be output to the external target device through wired connection by means of a transmission line or through wireless connection by use of radio waves or infrared rays.

The thus decoded controlling bit data will be acquired in accordance with the following procedure while monitoring the STATUS signal by using the microcomputer 206.

(1) Monitor the START flag to confirm that it is set and proceed to the next step.
(2) If the ERR flag is set, transmit the ACK signal and return to step (1).
(3) Receive an eight-bit data (controlling bit data) and, if it is not an identification code ($E3), transmit the ACK signal and return to step (1).

(4) Transmit the ACK signal and clear all the flags.

(5) Monitor the DATA flag to confirm that it is set and proceed to the next step.

(6) If the ERR flag is set, transmit the ACK signal and return to step (1).

(7) Receive data and, if it has the same command No. as that of the previous data, transmit the ACK signal and return to step (1).

(8) Transmit the ACK signal and clear all the flags.

(9) Monitor the DATA flag to confirm that it is set and proceed to the next step.

(10) If the ERR flag is set, transmit the ACK signal and return to step (1).

(11) Receive data and set a data length in an internal register

(12) Transmit the ACK signal and clear all the flags.

(13) Monitor the DATA flag to confirm that it is set and proceed to the next step.

(14) If the ERR flag is set, transmit the ACK signal and return to step (1).

(15) Receive data and store command data pieces in a memory sequentially.

(16) Transmit the ACK signal and clear all the flags.

(17) Subtract 1 from the data length in the internal register and, if the result is not 0, return to step (13).

(18) Monitor the DATA flag to confirm that it is set and proceed to the next step.

(19) If the ERR flag is set, transmit the ACK signal and return to step (1).

(20) Receive data and conduct parity check on it and, if an error is detected, transmit the ACK signal and return to step (1).

(21) Transmit the ACK signal and clear all the flags.

The microcomputer 206 receives normal command data through the above processing and performs processing to execute the command data stored in the memory and then goes to step (1) again to enter a command wait state. In the command execution processing, for example, if having received control command 1 ($13) in a command example of FIG. 7, the external device is initialized and, if having received a control data ($AA) following a control command 2 ($20), outputs the $AA to a port to control the external target device.

In the above-described embodiment, output set values themselves of the constituent pixels of an information-embedded mark image have been compared with a threshold value, to decode this image into controlling bit data through binarization. Further, although a plurality of pixels have been handled as an aggregate, constantly those pixels have had the same set value in the aggregate or one representative value such as mean value has been employed as the output set value of this pixel aggregate.

However, another method that follows is possible. An information-embedded mark image is delimited into pixel aggregate units each of which is comprised of a constant number, at least two, of pixels having a constant relative positional relationship and then predetermined decoding preparation operations are performed on each of the output set values of the pixels belonging to each of those pixel aggregate units in order to operate and combine those output set values, to perform decoding into controlling bit data based on a result of those decoding operations.

Although the number of the pixels of each of the pixel aggregate units (that is, the number of the pixels whose output set values are combined by the decoding preparation operations) may be three or larger, basically the simplest method is to set it to two, that is, a pair of pixels (however, a larger number of pixels to be operated has such an advantage that the influence of fluctuations, if any, in specific output set value due to noise can be mitigate). In this case, it is advantageous also in processing to set, as an information-embedded pixel pair, a pair of pixels having a constant relative positional relationship, in particular, a pair of mutually adjacent pixels in a frame or between frames.

Since image information is successive in a plane space, neighboring pixels have values approximate to each other. Further, video image information, which comprises successive images, are successive along a time axis, so that pixels located at the same positions in adjacent frames (in the case of the NTSC Standards, images photographed every 1/30 second as a photographic recording unit) have values approximate to each other. In other words, the following three relationships are established:

(1) In pixel information on a horizontal line, output set values of the adjacent pixels are close to each other (neighbor correlation);

(2) Output set values of the pixels located at the same positions on the vertically successive lines are close to each other (line correlation); and

(3) Output set values of the pixels located at the same positions in the successive frames are close to each other (frame correlation).

It is possible to add those correlations as a difference value for identification of the contents of the controlling bit data to an information-embedded pixel pair, thereby information can be embedded with smaller changes in video (inconspicuously).

As for determination (H: 1, L:0) of the contents of a bit data using a difference, for the output set values a and b of each information-embedded pixel pair, a difference value c is obtained by performing subtraction a-b=c, so that, for example, if $c \geq 0$, H is given, and if $c < 0$, L is given (in this case, the threshold value is 0, but a value other than zero may be employed as the threshold value). Accordingly, it is possible to read controlling bit data without problems by manipulating output set values a and b of the information-embedded pixel pair in such a manner that $c \geq 0$ may be established when embedding the information of H and by correcting a and b in such a manner that $c < 0$ may be established when embedding the information of L.

Now, in order to provide tolerance against noise etc., the concept of margin D will be introduced. In other words, a' and b' are written by operating a and b with a minimum change so that the following relationships using this margin D may be satisfied.

$$\text{H: } a'-b'=D$$
$$\text{L: } a'-b'=-D$$
$$D>0$$

$$(51)$$

For example, margin D is set to 10 in a condition where a=100 and b=100 originally, when embedding the information of H, a and b are averaged as follows:

$$(a+b)/2=100$$

$$(52)$$

Therefore, the following relationships are given:

$$a'=((a+b)/2)+D/2=100+5=105$$
$$b'=((a+b)/2)-D/2=100-5=95$$

$$(53)$$

Then, output set values a and b of the pixel pair in an original main image are corrected and shifted to the above-described a' and b' to provide the output set values of an information-embedded pixel pair. On the other hand, when embedding the information of L, the following relationships are given:

$$a'=((a+b)/2)-D/2=100-5=95$$
$$b'=((a+b)/2)+D/2=100+5=105$$

$$(54)$$

Then, similarly, a and b are corrected and shifted to a' and b'.

In such a manner, since the pixels of a pixel pair in a main image are adjacent to each other, their output set values of a and b are originally close to each other, so that it will be understood that information can be embedded with a relatively small shift for correction (5 in the case of this example). Further, when embedding the information of H in a case, for example, where a pixel pair in the main image has output set values a=115 and b=100, the following relationship is established:

$$a-b=15 \geq D(=10)$$

$$(55)$$

Therefore, the pixel pair in the main image can be diverted as an information-embedded pixel pair without changing their output set values (that is, without correction).

By employing a method of embedding controlling bit data as a difference in output set values of an information-embedded pixel pair having approximate values due to the correlations, it is possible to realize embedding of the controlling bit data that is inconspicuous due to a small change with respect to an original image.

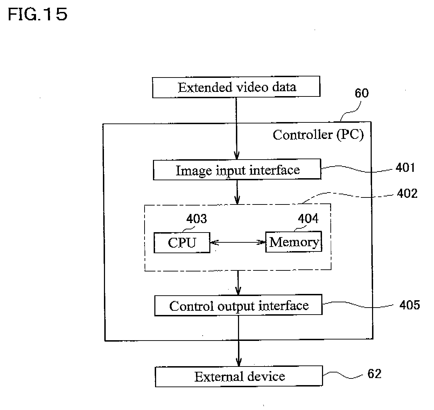

It will be described more specifically below. The video-linked controller of external target device 60 of FIG. 1 is, in this case, in charge of reading the output set values of a pixel pair and decoding preparation operations by use of them and decoding processing. The overall system configuration including the controller 60 is identical to that of FIG. 1. Recently, the personal computer (PC) has been improved in operation capability, to have a capability to control the external device 62 by decoding the control information in real time based on an embedded image. Here, an example where the controller is constituted mainly of the PC 60 will be shown as an implementation in FIG. 15. Extended video data containing an information-embedded mark image (that is, image information in which control information is embedded) is input by equipping the PC 60 with a medium such as a DVD (DVD player or VCR (indicated by symbol 61) similar to that in FIG. 1) and an image input interface (specifically, a DVD drive, a USB interface, a video capture card, a LAN card, a TV tuner, etc.) 401 that accommodates delivery through the Internet and, further, TV broadcasting etc. as a data source.

The PC 60 comprises an operation processing section 402 that has a CPU 403 and a work memory 404. Based on a predetermined program processing, the operation processing section 402 acquires information-embedded pixel pairs from a group of the pixels of a predetermined line in an extended video data and performs comparison operations on their pixel set values (a', b') to develop them into controlling bit data sequentially. Then, it performs the similar error check processing and determination processing by use of an identification code as those already described above on the controlling bit data, to decode the final control data. This information is output to the external device 62 from the control output interface (a USB, an RS 232, a parallel interface, etc.) 403 that accommodates a device to be controlled so that it may be used to control it. It should be noted that the controller 60 may be a hardware designed for a dedicated purpose of achieving much the same processing capabilities as those of the above-described PC.

As described above, the following three methods are available for performing decoding preparation operations.

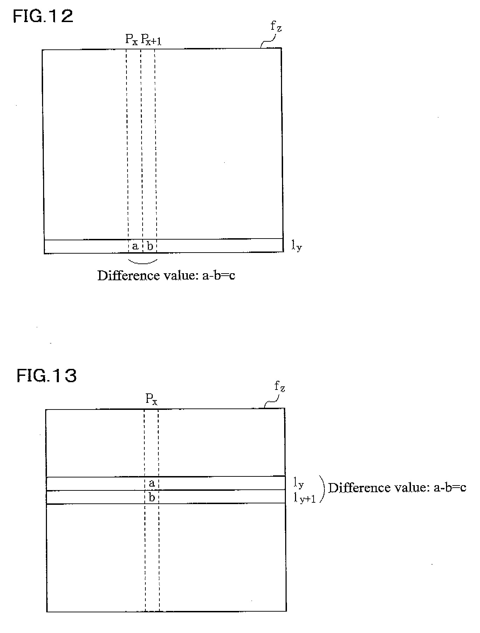

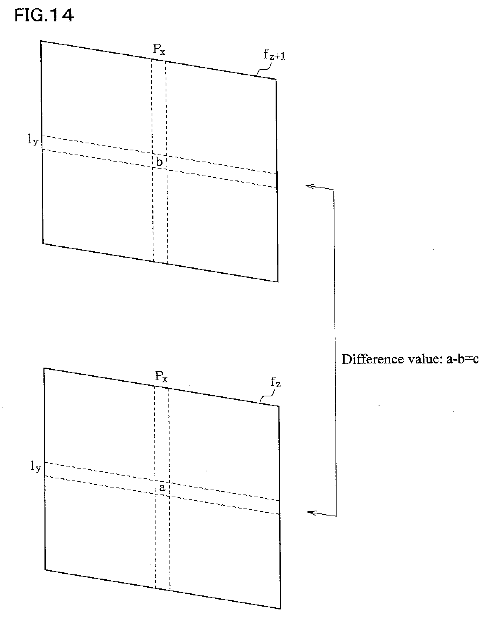

(A) Utilization of neighbor correlation: In FIG. 12, two pixels a and b located to adjacent positions Px and Px+1 on a horizontal line (scanning line) ly in a frame fz.
(B) Line correlation: In FIG. 13, two pixels a and b located to the same horizontal position Px on the vertically successive lines (scanning line) ly and 1y+1 in the frame fz.
(C) Frame correlation: In FIG. 14, two pixels a and b located to the same horizontal and vertical positions Px and ly in the adjacent frames fz and fz+1.

Any of the above approximate value pairs a and b of the adjacent pixels will be corrected. It should be noted that as pixel output set values, besides the values of generally used components R, G, and B or Y, U, and V, their composite values (for example, $(R^2+G^2+B^2)^{1/2}$) may be used. Further, as a result, values a and b will have a different range; however, for simplification of explanation, it is assumed below that they take on an integer in the range between 0 and 255. Further, although the above-described margin D is introduced to provide noise tolerance, etc., there may be a case where margin D need not be introduced depending on a usage environment (for example, the case of handling a digital image that is free from deteriorations at all).

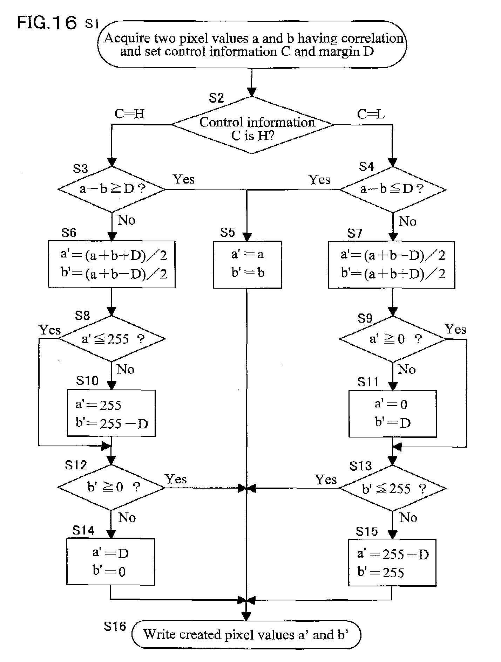

FIG. 16 shows a procedure of calculating output set values a' and b' of an information-embedded pixel pair which are used to embed one-bit controlling bit data (C=H or L) in the above-described two pixel output set values a and b. At S01, acquire necessary information and initialize it.

☐ At S02, divide into branches in accordance with the one-bit controlling bit data (C=H or L) to be embedded.
☐ At S03 and 504, if a difference value between the output set values a and b of an original pixel exceeds margin D, directly proceed to S05 to substitute a value and output it.
☐ At S06 and S07, calculate write values a' and b' which include margin D.
☐ At S08 and S13, if the value exceeds an upper limit, divide into branches and perform adjustment at S10 and S15.
☐ At S12 and S09, if the value falls under a lower limit, divide into branches and perform adjustment at S14 and S11.
☐ At S16, write the calculated values a' and b' to the positions of the output set values a and b of the original pixel.

Tables 1, 3, and 5 show examples of correctively calculating the output set values of pixels in the case of further embedding embed information: $111000111_B$ (see FIG. 7) to which a vertical parity bit is added in controlling bit data $E3_H$: $11100011_B$ by using the above-described correlations (A), (B), and (C) (acquired pixel values refer to pre-correction pixel values and write pixel values refer to post-correction pixel values).

[Table 1]

| Pixel No. | D0 | D1 | D2 | D3 | D4 | D5 | D6 | D7 | D8 | D9 | D10 | D11 | D12 | D13 | D14 | D15 | D16 | D17 | D18 |
|---|---|---|---|---|---|---|---|---|---|---|---|---|---|---|---|---|---|---|---|
| Acquired pixel value | 100 | 104 | 105 | 120 | 128 | 138 | 152 | 91 | 43 | 7 | 3 | 5 | 123 | 255 | 255 | 245 | 230 | 247 | 251 |
| Embedded information | | H | | H | | H | | L | | L | | L | | H | | H | | H | |
| Correction value | -3 | 3 | 0 | 0 | 0 | 0 | 0 | 0 | 0 | 0 | 7 | -5 | 0 | 0 | -10 | 10 | 0 | 0 | |
| Write pixel value | 97 | 107 | 105 | 120 | 128 | 138 | 152 | 91 | 43 | 7 | 10 | 0 | 123 | 255 | 245 | 255 | 230 | 247 | |

[Table 2]

| Pixel No. | D0 | D1 | D2 | D3 | D4 | D5 | D6 | D7 | D8 | D9 | D10 | D11 | D12 | D13 | D14 | D15 | D16 | D17 | D18 |
|---|---|---|---|---|---|---|---|---|---|---|---|---|---|---|---|---|---|---|---|
| Acquired pixel value | 97 | 107 | 105 | 120 | 128 | 138 | 152 | 91 | 43 | 7 | 10 | 0 | 123 | 255 | 245 | 255 | 230 | 247 | |
| Difference value | | 10 | | 15 | | 10 | | -61 | | -36 | | -10 | | 132 | | 10 | | 17 | |
| Acquired information | | H | | H | | H | | L | | L | | L | | H | | H | | H | |

EP 1 998 565 A1

[Table 3]

| Pixel No. | D0 | D1 | D2 | D3 | D4 | D5 | D6 | D7 | D8 | D9 |
|---|---|---|---|---|---|---|---|---|---|---|
| Acquired pixel value (L478) | 49 | 25 | 3 | 35 | 111 | 156 | 211 | 242 | 255 | 255 |
| Acquired pixel value (L479) | 38 | 22 | 2 | 55 | 124 | 158 | 193 | 240 | 255 | 255 |
| Embedded information | H | H | H | L | L | L | H | H | H | |
| Correction value (L478) | 0 | 3 | 7 | 0 | 0 | -4 | 0 | 4 | 0 | |
| Write pixel value (L478) | 49 | 28 | 10 | 35 | 111 | 152 | 211 | 246 | 255 | |
| Correction value (L479) | 0 | -4 | -2 | 0 | 0 | 4 | 0 | -4 | -10 | |
| Write pixel value (L479) | 38 | 18 | 0 | 55 | 124 | 162 | 193 | 236 | 245 | |

[Table 4]

| Pixel No. | D0 | D1 | D2 | D3 | D4 | D5 | D6 | D7 | D8 | D9 |
|---|---|---|---|---|---|---|---|---|---|---|
| Acquired pixel value (L478) | 49 | 28 | 10 | 35 | 111 | 152 | 211 | 246 | 255 | |
| Acquired pixel value (L479) | 38 | 18 | 0 | 55 | 124 | 162 | 193 | 236 | 245 | |
| Difference value | 11 | 10 | 10 | -20 | -13 | -10 | 18 | 10 | 10 | |
| Acquired information | H | H | H | L | L | L | H | H | H | |

[Table 5]

| Pixel No. | D0 | D1 | D2 | D3 | D4 | D5 | D6 | D7 | D8 | D9 |
|---|---|---|---|---|---|---|---|---|---|---|
| Acquired pixel value (F1: L479) | 49 | 25 | 3 | 35 | 111 | 156 | 211 | 242 | 255 | 255 |
| Acquired pixel value (F2: L479) | 38 | 22 | 2 | 55 | 124 | 158 | 193 | 240 | 255 | 255 |
| Embedded information | H | H | H | L | L | L | H | H | H | |
| Correction value (F1: L479) | 0 | 3 | 7 | 0 | 0 | -4 | 0 | 4 | 0 | |
| Write pixel value (F1: L479) | 49 | 28 | 10 | 35 | 124 | 152 | 211 | 246 | 255 | |
| Correction value (F2: L479) | 0 | -4 | -2 | 0 | 0 | 4 | 0 | -4 | -10 0 | |
| write pixel value (F2: L479) | 38 | 18 | 0 | 55 | 111 | 162 | 193 | 236 | 245 | |

[Table 6]

| Pixel No. | D0 | D1 | D2 | D3 | D4 | D5 | D6 | D7 | D8 | D9 |
|---|---|---|---|---|---|---|---|---|---|---|
| Acquired pixel value (F1: L479) | 49 | 28 | 10 | 35 | 111 | 152 | 211 | 246 | 255 | |
| Acquired pixel value (F2: L479) | 38 | 18 | 0 | 55 | 124 | 162 | 193 | 236 | 245 | |
| Difference value | 11 | 10 | 10 | -20 | -13 | -10 | 18 | 10 | 10 | |
| Acquired information | H | H | H | L | L | L | H | H | H | |

In the embedding example by use of the neighbor correlation (A) in Table 1, suites (D0, D1), (D2, D3), (D4, D5),..., of the adjacent pixels on a horizontal line are acquired and substituted as a suite of values (b, a). As a result, the first values of a=104 and b=100 are obtained. On the other hand, as calculations performed to embed the first controlling bit data H (H:1, L:0), a'=107 and b'=97 are obtained. Similarly, the process calculates the output set values of a write pixel required to embed nine-bit controlling bit data $111000111_B$ by using 18 acquired pixels D0-D17. To decode the controlling bit data from this image, subtraction a-b=c is performed on suites (D0, D1), (D2, D3), (D4, D5),...,

to obtain a difference value c and, if c≥0 or c<0, it can be determined that H(1) and L(0) are given respectively. In such a manner, as shown in Table 2, HHHLLLHHH=111000111$_B$ is obtained as a result of decoding the controlling bit data. In the embedding example by use of the line correlation in Table 3, values of suites (L478: D0, L479: D0), (L478: D1, L479: D1), (L478: D2, L479: D3),..., of the output set values of the pixels located at the same vertical positions on the successive horizontal lines L478 and L479 are obtained and substituted as a suite of values (a, b), thereby calculating output set values (a', b') of a write pixel. The write information value of a' and that of b' are rewritten to lines 478 and 479, respectively to generate an embedded image, which can be decoded into a correct controlling bit data as shown in Table 4.

Similarly, in the embedding example by use of the frame correlation in Table 5, values of suites (F1: L479: D2, F2: L479: D0), (F1: L479: D1, F2: L479: D1), (F1: L478: D2, F2: L479: D2),..., of the output set values of the pixels located to the same vertical positions on the same horizontal line L479 in the successive frames F1 and F2 are obtained and substituted as a suite of values (a, b), thereby calculating output set values (a', b') of a write pixel. The write information value of a' and that of b' are rewritten to a line 479 in a frame 1 and the line 479 in a frame F2, respectively to generate an embedded image, which can be decoded into a correct controlling bit data as shown in Table 6.

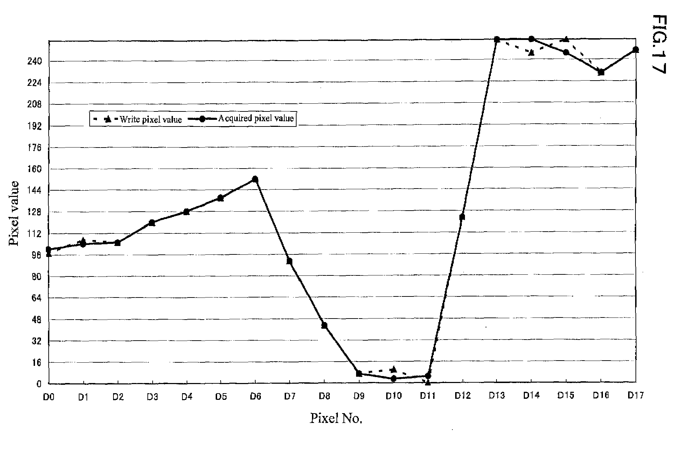

It should be noted that a corrected value obtained by subtracting the output set value of a write pixel from the output set value of an acquired pixel is, for example, -3 at D0 and +3 at D1 in Table 1 and small in value with respect to the pixel value range of 0-255, thus resulting in less changes in the image. Further, values at (D2, D3) are used as controlling bit data without changing the image. The output set values (solid line) of the acquired pixels and the output set values (broken line) of the write pixels in Table 1 may be transformed into a graph such as shown in FIG. 17. This figure tells that a difference between the output set values of two pixels is small enough to be reduced to such a level that an image in which controlling bit data is embedded cannot be distinguished from its original image visually.

## Claims

1. A video-linked controller of external target device, in which:

    a video player that uses, as a video data source, an extended video data obtained by adding, to a first video data required for outputting a video signal of a main image, second video data required for outputting a video signal of an information-embedded mark image that reflects in it contents of a control information used to control operations of an external target device is connected in use to said external target device; and
    said controller comprises:

        a mark image reproduced video signal extraction means to extract a mark image reproduced video signal, which is output from said player as reproduction of said video data goes on, from an extended video signal obtained by adding an information-embedded mark image reproduced video signal based on said second video data to a main image reproduced video signal based on said first video data;
        an operation control data decoding means to analyze contents of said mark image reproduced video signal and decode them into an operation control data that can be read directly by said external target device in order to perform operation control processing on itself; and
        an operation control data output means to output the decoded operation control data to said external target device.

2. The video-linked controller of external target device according to claim 1, in which:

    said extended video data is created as a data of an extended video frame obtained by embedding said information-embedded mark image in a video frame used to display said main image on an output monitor; and
    said mark image reproduced video signal extraction means extracts as said mark image reproduced video signal a video signal of pixels of said information-embedded mark image from a reproduced video signal based on data of the extended video frame.

3. The video-linked controller of external target device according to claim 2, in which:

    an output set values of pixels of said image are quantized into a plurality of stages of at least two bits having a predetermined order, to establish a unique correspondence relation between rankings in said order of those output set values and controlling bit data comprised of a plurality of bits to describe contents of said control information; and
    said operation control data decoding means has controlling bit data decoding means to detect said output set values of said pixels reflected in said mark image reproduced video signal and decode them into said controlling bit data based on said correspondence relation.

4. The video-linked controller of external target device according to claim 3, in which:

said information-embedded mark image is delimited into pixel aggregate units each of which is comprised of a plurality of pixels having uniformly predetermined output set values; and
said controlling bit data decoding means performs decoding into said controlling bit data based on said output set values predetermined for said pixel aggregate units.

5. The video-linked controller of external target device according to claim 4, in which:

said extended video signal is an analog video signal; and
said controlling bit data decoding means has an A/D converter that decodes an analog input value of the analog video signal in which said output set values are reflected into said controlling bit data by converting it into a digital value.

6. The video-linked controller of external target device according to any one of claims 3-5, in which a plurality of said controlling bit data pieces obtained by said decoding are aggregated to constitute a description unit field of said operation control data.

7. The video-linked controller of external target device according to claim 6, in which:

a plurality of said description unit fields are aggregated to constitute frame structure data which provides a unit for outputting said operation control data to said external target device; and
the frame structure data includes, starting from the beginning in its output time series, an identification field to identify that the subsequent pixel strings are frame structure data that describe said operation control data, a data length field to indicate a data length of said frame structure data, and a main field to indicate contents of said operation control data for said external target device, in this order.

8. The video-linked controller of external target device according to claim 7, in which:

said controlling bit data that constitute each of said description unit field all have the same number of data bits; and
the end of a data bit string in each of said description unit fields is made to be a vertical parity bit for parity check of the data bit string, while the last description unit field of said frame structure data specified by said data length is made to be a horizontal parity field that collects a plurality of horizontal parity bits for collectively performing parity check on the individual data bits having such an order that their preceding description unit fields may correspond to each other.

9. The video-linked controller of external target device according to claim 7 or 8, in which the number of said main fields can be increased or decreased in accordance with a size of said operation control data and said data length described in said data length field is altered in accordance with the number of said main fields.

10. The video-linked controller of external target device according to any one of claims 7-9, in which:

a command number field that stores a command number which uniquely specifies an order to execute commands for said external target device based on said operation control data described in said main field is interposed between said identification field and said data length field; and a plurality of pieces of frame structure data that has the same description contents of said main field and said command number are repeatedly embedded into a plurality of the same said video frames or video fields.

11. The video-linked controller of external target device according to any one of claims 3-10, in which:

said information-embedded mark image is delimited into pixel aggregate units each of which is composed of a constant number, at least two, of pixels having a constant relative positional relationship; and
said controlling bit data decoding means performs predetermined decoding preparation operations to operate and combine said output set values of the individual pixels belonging to said pixel aggregate units and performs decoding into said controlling bit data based on a result of said decoding operations.

**12.** The video-linked controller of external target device according to claim 11, in which said pixel aggregate unit is defined as an information-embedded pixel pair constituted of pixel pairs whose relative positional relationship is defined constant.

**13.** The video-linked controller of external target device according to claim 12, in which said information-embedded pixel pair is defined as a pair of pixels that are adjacent to each other in the same frame.

**14.** The video-linked controller of external target device according to claim 13, in which said information-embedded pixel pair is defined as a pair of pixels that are adjacent to each other on the same scanning line.

**15.** The video-linked controller of external target device according to claim 13, in which said information-embedded pixel pair is defined as a pair of pixels that are adjacent to each other between mutually adjacent scanning lines in the same frame.

**16.** The video-linked controller of external target device according to claim 12, in which said information-embedded pixel pair is defined as a pair of pixels that are adjacent to each other between mutually adjacent frames.

**17.** The video-linked controller of external target device according to any one of claims 12-16, in which said controlling bit data decoding means performs difference operations on the output set values of said information-embedded pixel pairs as said decoding preparation operations and performs decoding into said controlling bit data based on a result of comparison of a difference value obtained by said difference operations to a predetermined threshold value.

**18.** The video-linked controller of external target device according to claim 17, in which said information-embedded pixel pair is generated by correctively converting the output set values of the corresponding original pixel pair that has originally constituted said main image in such a manner that difference values which give the controlling bit data having intended contents can be obtained by said decoding preparation operations.

**19.** The video-linked controller of external target device according to claim 18, in which the corrective contents are defined of said output set values required for converting said original pixel pair into said information-embedded pixel pair so that said difference value may be at least a predetermined margin in said decoding.

**20.** The video-linked controller of external target device according to any one of claims 2-19, in which:

data of said extended video frame is an array in which pixel setting information pieces that define the output set condition of each pixel on said output monitor are arranged in an order of the pixels on the scanning lines which display said extended video frame on said output monitor; and
a region in which said information-embedded mark image is displayed is determined as the scanning line at a predetermined position in said video frame.

**21.** The video-linked controller of external target device according to claim 20, in which:

said output monitor is of a raster scanning scheme; and one or a plurality of the scanning lines located at an either upper or lower end in said video frame are defined as a region for displaying said information-embedded mark image.

**22.** The video-linked controller of external target device according to claim 20 or 21, in which:

said information-embedded mark image is delimited into pixel aggregate units each of which is comprised of a plurality of pixels that are adjacent to each other on the scanning line and have a uniformly predetermined output set conditions; and
said controlling bit data decoding means performs decoding into said controlling bit data based on said output set values predetermined for said pixel aggregate units.

**23.** A video recording medium that is used as said video data source for the video-linked controller of external target device according to any one of claims 1-22 and records said extended video data obtained by adding, to said first video data required for outputting the video signal of said main image, said second video data required for outputting the video signal of said information-embedded mark image that reflects in it the contents of the control information used to control the operations of said external target device in such a manner that said extended video data can be reproduced in said video player connected to said video-linked controller of external target device.

FIG.1

FIG.2

FIG.3 100 104 102A (102B)

105A  105B  105C

FIG.4

100  104  102A 102B

105A  105B  105C

FIG.5

Luminance

| 0 | 0 ~ 1 F |
| 1 | 2 0 ~ 3 F |
| 2 | 4 0 ~ 5 F |
| 3 | 6 0 ~ 7 F |
| 4 | 8 0 ~ 9 F |
| 5 | A 0 ~ B F |
| 6 | C 0 ~ D F |
| 7 | E 0 ~ F F |

105

FIG.6

R, G, B

| 0 | 0, 0, 0 | Black | 105 |
| 1 | 0, 0, 1 | Blue | |
| 2 | 0, 1, 0 | Green | |
| 3 | 0, 1, 1 | Light blue | |
| 4 | 1, 0, 0 | Red | |
| 5 | 1, 0, 1 | Pink | |
| 6 | 1, 1, 0 | Yellow | |
| 7 | 1, 1, 1 | White | |

FIG.7

EP 1 998 565 A1

| | Field name | Controlling bit data | | VRC | Pixel output set value | Luminance pattern | Color pattern | | |
|---|---|---|---|---|---|---|---|---|---|
| | | Hexadecimal | Binary | | | | | | |
| 1 | Identification code | $ E 3 | %111 000 11 | 1 | 7, 0, 7 | | White | Black | White |
| 2 | Command No. | $ 0 1 | %000 000 01 | 1 | 0, 0, 3 | | Black | Black | Light blue |
| 3 | Data length | $ 0 3 | %000 000 11 | 0 | 0, 0, 6 | | Black | Black | Yellow |
| 4 | Control command 1 | $ 1 3 | %000 100 11 | 1 | 0, 4, 7 | | Black | Red | White |
| 5 | Control command 2 | $ 2 0 | %001 000 00 | 1 | 1, 0, 1 | | Blue | Black | Blue |
| 6 | Control data 2 | $ A A | %101 010 10 | 0 | 5, 2, 4 | | Pink | Green | Red |
| 7 | LRC | $ 7 0 | %011 110 00 | 0 | 3, 6, 0 | | Light blue | Yellow | Black |

FIG.8

FIG.9

# FIG.10

FIG.11

FIG.12

Difference value: a-b=c

FIG.13

Difference value: a-b=c

## FIG.14

Difference value: a-b=c

FIG.15

Extended video data

60

Controller (PC)

Image input interface — 401

— 402

403 404

CPU ←→ Memory

Control output interface — 405

External device — 62

FIG.16

**S1** Acquire two pixel values a and b having correlation and set control information C and margin D

**S2** Control information C is H?

C=H

C=L

**S3** a−b≧D ?

**S4** a−b≦D ?

Yes → → ← Yes

No

No

**S6**
a'=(a+b+D)/2
b'=(a+b−D)/2

**S5**
a'=a
b'=b

**S7**
a'=(a+b−D)/2
b'=(a+b+D)/2

**S8** a'≦255 ?

**S9** a'≧0 ?

Yes

Yes

No

No

**S10**
a'=255
b'=255−D

**S11**
a'=0
b'=D

**S12** b'≧0 ?

**S13** b'≦255 ?

Yes → ← Yes

No

No

**S14**
a'=D
b'=0

**S15**
a'=255−D
b'=255

**S16** Write created pixel values a' and b'

FIG.17

**INTERNATIONAL SEARCH REPORT**

| International application No. |
|---|
| PCT/JP2007/053920 |

A. CLASSIFICATION OF SUBJECT MATTER
*H04N5/91(2006.01)i*

According to International Patent Classification (IPC) or to both national classification and IPC

B. FIELDS SEARCHED

Minimum documentation searched (classification system followed by classification symbols)
H04N5/91

Documentation searched other than minimum documentation to the extent that such documents are included in the fields searched
Jitsuyo Shinan Koho        1922-1996    Jitsuyo Shinan Toroku Koho   1996-2007
Kokai Jitsuyo Shinan Koho  1971-2007    Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 10-164524 A (Sony Corp.), 18 June, 1998 (18.06.98), Par. Nos. [0008] to [0042]; Figs. 1 to 11 (Family: none) | 1-23 |
| A | JP 2004-048186 A (Seiko Epson Corp.), 12 February, 2004 (12.02.04), Par. Nos. [0035] to [0150]; Figs. 1 to 24 (Family: none) | 1-23 |
| A | JP 2000-059857 A (Casio Computer Co., Ltd.), 25 February, 2000 (25.02.00), Par. Nos. [0027] to [0099]; Figs. 1 to 11 & US 6539240 B1 | 1-23 |

| ☒ Further documents are listed in the continuation of Box C. | ☐ See patent family annex. |
|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02 May, 2007 (02.05.07) | 22 May, 2007 (22.05.07) |

| Name and mailing address of the ISA/ Japanese Patent Office | Authorized officer |
|---|---|
| Facsimile No. | Telephone No. |

Form PCT/ISA/210 (second sheet) (April 2005)

**INTERNATIONAL SEARCH REPORT**

| International application No. |
| --- |
| PCT/JP2007/053920 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-066156 A  (Fujitsu Ltd.),<br>05 March, 2002 (05.03.02),<br>Par. Nos. [0031] to [00146]; Figs. 1 to 13<br>& US 6292714 B1 | 1-23 |

Form PCT/ISA/210 (continuation of second sheet) (April 2005)

**EP 1 998 565 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007053920 W
- JP 2006055136 A
- JP 10164524 A